# FASCICULE DE BREVET EUROPEEN

(11) **EP 2 383 456 B1**
(45) Date de publication et mention de la délivrance du brevet: **06.03.2013**
(21) Numéro de dépôt: 11160045.8
(22) Date de dépôt: 28.03.2011
(51) Int. Cl.: F02K 1/72, F15B 11/12

(54) **Vérin hydraulique simple effet**
Einfach wirkender Hydraulikzylinder
Single acting hydraulic cylinder

(30) Priorité: 30.03.2010 FR 1052330
(43) Date de publication de la demande: 02.11.2011
(73) Titulaire: AIRBUS OPERATIONS (S.A.S), 31060 Toulouse (FR)
(72) Inventeur: Anscieau, Marc, 31530, Lasserre (FR); Bignolais, Alain, 31490, LEGUEVIN (FR)
(74) Mandataire: Fourcade, Emmanuelle

(56) Documents cités:
- WO-A1-01/74612
- FR-A- 1 124 969
- JP-A- 59 023 107

## Description

L'invention concerne le domaine des vérins hydrauliques. Plus précisément l'invention a trait aux vérins hydrauliques simple effet à tige télescopique.

Dans un exemple d'application courant, de tels vérins sont utilisés pour déplacer des charges d'une position d'équilibre à une autre, en contrant, par la force qu'ils produisent, l'effet de la gravité.

Conformément à l'usage et à la norme ISO1219, sauf indication contraire, les éléments d'automatisme sont représentés connectés au circuit dans leur état au repos, non activé ou de départ.

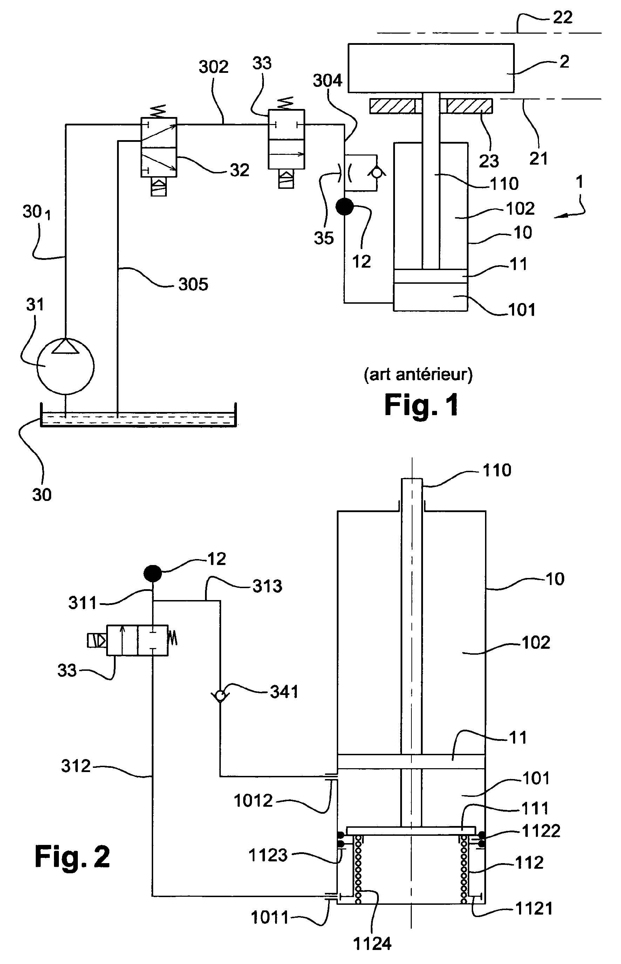

Figure 1, ces vérins comprennent un corps (10), généralement cylindrique, séparé de manière étanche en deux chambres (101, 102) par un piston (11) lié à une tige (110). Un connecteur hydraulique (12) permet de mettre en communication l'une des chambres avec un circuit hydraulique. Ce circuit hydraulique, selon un exemple de réalisation simple, est un circuit fermé qui comprend une bâche (30) contenant un fluide hydraulique, une pompe (31), apte à accroître la pression et le débit dudit fluide dans le circuit, un actionneur hydraulique, tel qu'un vérin simple effet (1), un premier distributeur (32), apte à mettre la pompe hydraulique en communication avec un second distributeur (33), apte à mettre le circuit hydraulique en communication avec la chambre de pressurisation (101) du vérin (1).

Dans cet exemple la pompe et les pilotes des distributeurs sont alimentés électriquement.

L'ensemble étant mis sous tension, la pompe provoque la montée en pression du fluide hydraulique, et, par la commutation des distributeurs (32, 33) le fluide hydraulique est mis en communication avec la chambre de pressurisation (101) du vérin, ce qui a pour effet de déplacer en translation le piston (11), sous une force proportionnelle à la pression, et de déplacer la charge (2) vers une position dite haute (22).

Si l'alimentation électrique est coupée, la pompe s'arrête et les distributeurs (32 et 33) reviennent à leur position d'origine. La chambre de pressurisation ne peut pas se vider et la tige du vérin (110) reste sensiblement en position, même soumise au poids de la charge.

En changeant d'état le second distributeur (33), la chambre de pressurisation (101) du vérin est mise en communication avec la bâche (30) et peut ainsi se vider. Sous l'effet de son propre poids, la charge (2) se déplace en sens inverse, chassant le fluide hydraulique contenu dans la chambre de pressurisation vers la bâche. Avantageusement un limiteur de débit ou « étranglement » (35), placé sur le circuit de retour (305), permet de réduire la vitesse à laquelle la charge revient vers sa position dite basse (21). Par la suite on désigne par position basse la position que prendrait la charge déplacée par le vérin lorsque celle-ci est soumise à la gravité en l'absence de toute sollicitation du vérin.

Selon ce dispositif, si une coupure d'alimentation électrique accidentelle intervient au cours du levage de la charge vers la position haute, la charge s'immobilise en position. Par conséquent le dispositif revient toujours dans cette configuration lorsqu'il n'est pas alimenté électriquement, que cette alimentation provienne du secteur ou de batteries.

Or, dans cette configuration, la chambre de pressurisation étant obturée de manière étanche, toute tentative de modification de la position longitudinale de la tige du vérin produira une modification du volume de fluide hydraulique ainsi emprisonné et une force de rappel proportionnelle à la modification de pression que produira ce changement de volume dans le fluide hydraulique. Les fluides hydrauliques étant dits incompressibles, cette force sera très élevée y compris pour des petits déplacements de la charge.

Ainsi, lorsqu'un tel circuit est utilisé uniquement pour manoeuvrer des charges, par exemple pour l'ouverture d'un capotage, d'une trappe, d'une porte, d'un pont levant ou de tout autre dispositif dont le poids est repris par des appuis mécaniques ou des verrouillages autres que le vérin en position basse de fin de course, cette force de rappel hydraulique donne naissance à des efforts parasites qui peuvent endommager la tige du vérin, les moyens de liaison dudit vérin avec la charge, les moyens de verrouillage ou de reprise des efforts en fin de course ou entraîner des effets dynamiques incontrôlés. Une solution connue de l'art antérieur consiste à installer une double commande sur le second distributeur, de sorte que son état puisse par exemple être changé par une commande manuelle lorsqu'il n'est pas alimenté électriquement. Dans ce cas, lorsque le vérin arrive en fin de course en position basse et que l'alimentation électrique est coupée, l'état du second distributeur est modifié manuellement de sorte à mettre la chambre de pressurisation en communication avec la bâche. Une telle solution est dangereuse, car une manoeuvre manuelle intempestive du second distributeur alors que l'alimentation électrique est coupée et que la charge est en position haute peut entraîner une chute de ladite charge.

Il existe donc un besoin pour limiter la pression dans la chambre de pressurisation d'un vérin simple effet lorsque la tige de celui-ci est dans une plage de position déterminée proche de la position basse de la charge, dite position de sécurité, tout en respectant la sécurité de fonctionnement du dispositif, c'est-à-dire qu'en cas de coupure d'alimentation de l'énergie de pilotage des distributeurs et de la pompe hydraulique, la tige du vérin reste dans sa position si cette position n'est pas comprise dans la plage de sécurité.

Ladite plage est qualifiée de sécurité car la distance entre la charge et ses éléments de support ou de verrouillage est si faible qu'il ne peut pas y avoir de personnes, de membres ou de biens se trouvant sous la charge dans cette zone.

Avantageusement ce dispositif doit pouvoir se substituer à un dispositif existant sans modification de la logique de commande dudit dispositif.

Le brevet français FR1603498 décrit un vérin comprenant un dispositif tel qu'au-delà d'une position axiale de fin de course de la tige, le piston entre en butée contre un segment annulaire logé dans une rainure du corps du vérin. Cette position en butée permet l'ouverture d'une valve qui envoie à la bâche le fluide hydraulique alimentant la chambre de pressurisation. Sous l'effet de la charge appliquée sur la tige du vérin et donc au piston, celui-ci recule alors et quitte le contact de la butée annulaire. La valve se referme, et la pression monte à nouveau dans la chambre de pressurisation, stoppant la course du vérin. Ce dispositif, est un dispositif de fin de course intervenant en position haute de la charge et la limitation de la pression dans la chambre lorsque le vérin arrive en fin de course par renvoi de l'alimentation hydraulique à la bâche n'est qu'un état transitoire.

Le document JP59023107 divulgue les caractéristiques du préambule de la revendication 1 et décrit un vérin simple effet multi-étage comprenant plusieurs pistons coaxiaux ayant chacun une course axiale limitée la course totale du vérin étant la somme des courses de chaque piston. À cet effet, le vérin décrit dans ce document comporte plusieurs orifices alimentant en fluide les différentes chambres de pressurisation à mesure de l'avancée des pistons successifs.

Pour résoudre les insuffisances de l'art antérieur l'invention propose un vérin hydraulique simple effet comprenant :
- Une chambre de pressurisation agissant sur un piston apte à se déplacer entre deux positions dites de fins de course,
- Un premier orifice débouchant dans ladite chambre de pressurisation quelle que soit la position du piston et apte à mettre en communication ladite chambre avec un circuit hydraulique lequel orifice est toujours passant,
- Un deuxième orifice débouchant dans ladite chambre de pressurisation quelle que soit la position du piston et apte à mettre en communication cette chambre avec un circuit hydraulique lequel orifice est passant pour une première plage de position du piston et fermé pour une seconde plage de position du piston, la limite entre les deux plages étant distincte des fins de course.

Ainsi, les fonctions techniques remplies par les caractéristiques particulières du vérin objet de l'invention sont propres à une seule chambre de pressurisation, pour le pilotage de l'avancée d'un seul piston, ladite chambre de pressurisation est reliée à deux orifices, le deuxième orifice n'étant passant que pour une plage de position du piston, laquelle plage permet notamment de définir une plage de position dite de sécurité. L'état passant ou non passant de ces deux orifices est indépendant du circuit hydraulique auquel est lié le vérin et notamment de la position de distributeurs ou de clapets extérieurs audit vérin, et ne dépend que de la position de la tige de celui-ci. Le circuit peut être adapté en fonction de l'effet recherché, le changement d'état du deuxième orifice étant indépendant de la disponibilité d'une commande externe au vérin, donc indépendant de la coupure de l'alimentation électrique ou hydraulique. Notamment, en reliant le deuxième orifice à la bâche, la pression est réduite dans la chambre de pressurisation pour une position de la tige du vérin proche de la position basse, dite position de sécurité, et ledit vérin n'oppose plus de force de réaction aux mouvements de la charge. En dehors de cette position de sécurité, le deuxième orifice n'est pas passant donc isolé de la chambre de pressurisation.

Avantageusement, ledit vérin comprend des moyens aptes à fermer le deuxième orifice quelle que soit la position du piston lorsque la chambre de pressurisation est alimentée en fluide hydraulique sous pression par le premier orifice. Ainsi, ledit vérin peut être installé en lieu et place d'un vérin simple effet existant sans modifier la logique de pilotage de celui-ci en rendant possible l'application d'une force à la charge y compris lorsque celle-ci se trouve dans sa position basse.

Selon un mode de réalisation avantageux, le vérin comprend un raccord apte à mettre en communication les deux orifices avec un circuit hydraulique et des moyens aptes à commuter la mise en communication du premier orifice avec ledit raccord. Ainsi le vérin peut être monté en lieu et place d'un vérin existant en n'utilisant qu'un seul raccordement.

Les moyens de commutation disposés sur le vérin peuvent avantageusement être utilisés pour un pilotage manuel de celui-ci en by-pass de la logique de commande.

L'invention sera maintenant plus précisément décrite dans le cadre de modes de réalisation préférés, nullement limitatifs, représentés sur les figures 1 à 7 dans lesquelles :
- la figure 1 représente schématiquement un vérin simple effet et son dispositif de commande selon l'art antérieur ;
- la figure 2 montre, toujours schématiquement, un mode de réalisation de l'invention dans sa position dite au repos ou basse ;
- la figure 3 illustre schématiquement la configuration du dispositif dans une situation de levée ou de descente de charge avant que la position dite de sécurité ne soit atteinte ;
- la figure 4 est un exemple schématique de réalisation de l'invention, présenté dans une position de sécurité et comprenant des moyens permettant un pilotage manuel du vérin ;
- La figure 5, illustre un exemple d'application du vérin selon l'invention pour l'ouverture d'une trappe ou d'un capotage ;
- Et les figures 6 et 7 représentent en vue partielle un exemple de réalisation en coupe longitudinale, intégrant l'ensemble des fonctions dans un bloc à l'extrémité du corps du vérin.

La figure 1 relative à l'art antérieur décrit un circuit de commande d'un vérin télescopique simple effet (1), affecté au déplacement d'une masse pesante (2) entre deux positions extrêmes (21,22) comprenant une position dite basse (21), pour laquelle la masse (2) repose sur un support reprenant le poids de celle-ci.

Le vérin (1) comprend un corps cylindrique (10), séparé de manière étanche en deux chambres (101, 102) par un piston (11), lequel est lié à une tige (110) qui agit sur la masse (2).

L'une des chambres du vérin, dite chambre de pressurisation (101), est connectée à un circuit hydraulique par un raccord (12).

Ledit circuit hydraulique comprend un réservoir de fluide hydraulique, ou bâche (30) et une pompe hydraulique (31) apte à mettre le fluide en circulation dans ledit circuit.

Le circuit comprend également deux distributeurs (32, 33) dont l'état peut être changé lorsque leur pilote est alimenté électriquement. Pour produire le déplacement de la masse (2) de sa position basse (21) vers sa position haute (22), la pompe hydraulique (31) étant en fonction et les distributeurs (32, 33) alimentés électriquement, le fluide hydraulique emprunte une première section de circuit (301) jusqu'au premier distributeur (32). Ce dernier étant alimenté électriquement, il met en communication la première section de circuit (301) avec une deuxième section de circuit (302) elle-même en communication avec le deuxième distributeur (33). Celui-ci étant alimenté électriquement, met en communication cette deuxième section de circuit (302) avec le raccord hydraulique (12) du vérin (1), par une quatrième section de circuit (304), lequel raccord (12) est passant et permet au fluide hydraulique sous pression de pénétrer dans la chambre de pressurisation (101), ce qui a pour effet de provoquer la translation du piston (11).

Lorsque la masse (2) est arrivée à la position voulue, l'alimentation électrique est interrompue, ce qui a pour effet de stopper la pompe et d'obstruer la quatrième section de circuit (304). Le vérin reste dans sa position.

Pour obtenir la descente de la masse vers sa position basse (21), le deuxième distributeur (33) est alimenté électriquement ce qui a pour effet de mettre en communication la quatrième section de circuit (304) avec la deuxième section de circuit (302) laquelle est connectée à la bâche (30) par une cinquième section de circuit (305). Ainsi, la chambre de pressurisation (101) se vide et le piston (11) recule sous l'effet du poids de la masse (2).

Figure 2, pour résoudre les insuffisances de l'art antérieur, l'invention propose un vérin (100), pouvant se connecter en lieu et place du vérin (1) selon l'art antérieur par un connecteur hydraulique (12) équivalent, en ne réalisant que des modifications mineures du circuit et en conservant la sécurité de son fonctionnement.

Selon un mode de réalisation le vérin comprend un corps (10) sensiblement cylindrique, séparé de manière étanche en deux chambres (101, 102) par un piston (11) lequel est lié à une tige (110) agissant sur la masse, et à un poussoir (111) agissant sur des moyens mobiles (112) dans la chambre de pressurisation (101).

Selon ce mode de réalisation, lesdits moyens mobiles comprennent une bague (112) sensiblement cylindrique s'étendant selon l'axe du vérin et apte à coulisser selon cet axe dans le corps du vérin et comprenant, côté poussoir, une gorge étanche (1122) par rapport aux parois intérieures du corps (10) du vérin et à son autre extrémité des moyens de guidage de la dite bague dans le corps du vérin, lesdits moyens de guidage permettant également d'arrêter en translation ladite bague sur une butée axiale (1123). Des moyens formant ressort (124) permettent de plaquer l'extrémité de la bague (112) contre le poussoir (111) lorsque celle-ci n'est pas en butée axiale.

La chambre de pressurisation (101) est en communication avec le circuit hydraulique par deux orifices (1011, 1012). Le premier orifice (1011) est toujours passant. Le second orifice (1012) est obturé lorsque la gorge étanche (1122) de la bague (112) est en vis-à-vis dudit orifice, ce qui est le cas lorsque ladite bague est en butée axiale.

Le circuit d'origine est légèrement modifié en plaçant le distributeur (33) en aval du connecteur (12). Le fonctionnement est sensiblement le même et la logique de commande n'est pas modifiée. Partant de la position basse, figure 2, la pompe (31) et les distributeurs (32, 33) sont alimentés électriquement. Le fluide hydraulique emprunte la section de circuit (311) entre le raccord (12) et le second distributeur (33) qui la connecte à la section de circuit (312) qui amène ledit fluide dans la chambre de pressurisation (101) par le premier orifice (1011). Le fluide sous pression emprunte également la section de circuit (313) comprise entre le raccord (12) et le second orifice (1012). Le fluide est néanmoins arrêté sur cette section (313) par un clapet anti-retour (341). La pression appliquée sur le dit clapet, ferme celui-ci empêchant également le passage du fluide du second orifice (1012) vers le raccord (12). La pression monte dans la chambre de pressurisation (101) et le piston (11) du vérin se déplace pour soulever la charge (2), entraînant dans sa course le poussoir (111). La bague mobile (112), plaquée sur ledit poussoir par les moyens formant ressort (1124), accompagne ce mouvement de translation.

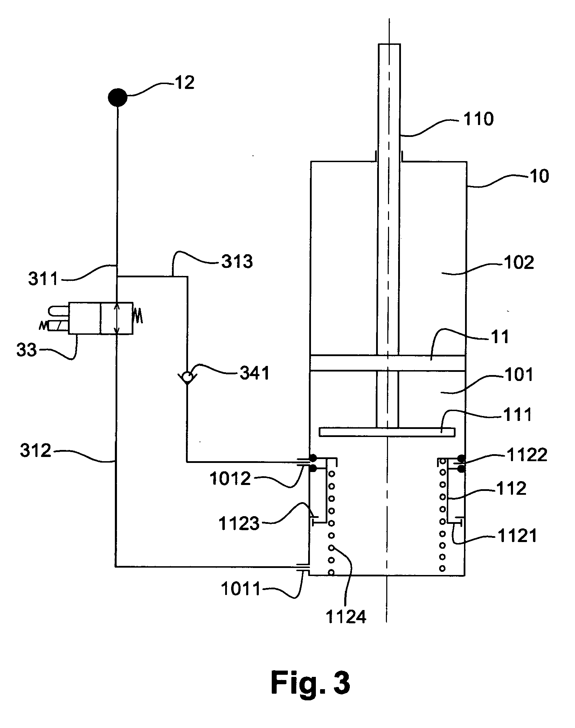

Figure 3, le second distributeur (33) est ici représenté dans son état « alimenté électriquement ». Le piston (11) continuant sa course, la bague (112) s'immobilise en translation contre la butée axiale (1123) et est maintenue dans cette position par les moyens formant ressort (1124). La bague mobile (112) étant maintenue dans cette position, le second orifice (1012) est obstrué par la gorge étanche (1122) de ladite bague. Le piston continue à avancer. Mais si, au-delà de cette position, l'alimentation électrique des distributeurs (32, 33) est sectionnée, ceux-ci reviennent à leur position de repos et le fluide ne peut pas s'échapper de la chambre de pressurisation (101), ni par le premier orifice (1011), dont la connexion au circuit hydraulique est obstruée par le second distributeur (33), ni par le second orifice (1012), qui lui est obstrué par la gorge étanche (1122) de la bague mobile (112). En conséquence, le piston reste en position.

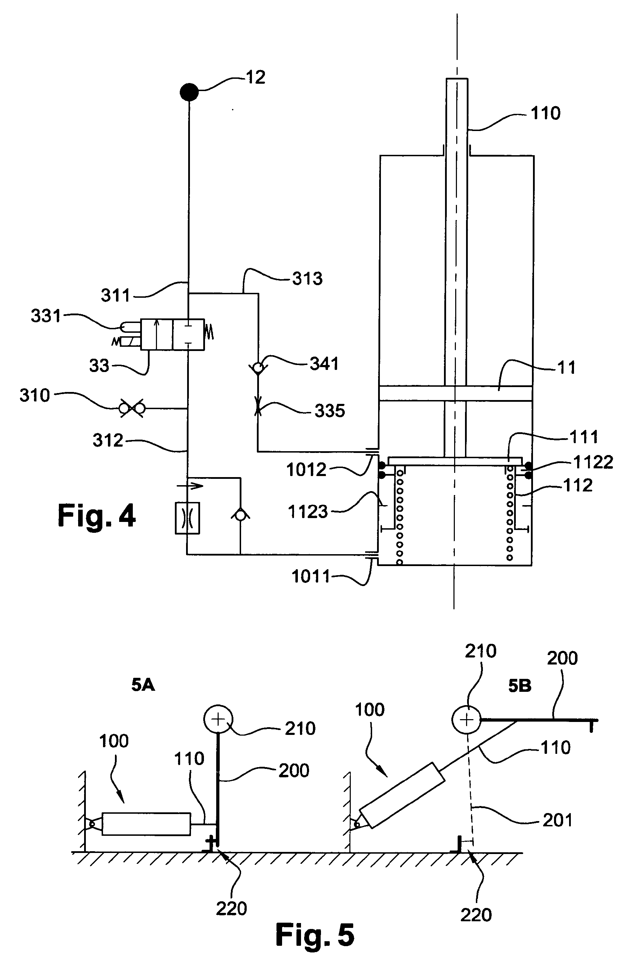

Figure 4, en revanche, si l'alimentation électrique est sectionnée alors que la bague (112) n'a pas encore été arrêtée par la butée axiale, le fluide ne peut s'échapper de la chambre de pressurisation (101) par le premier orifice (1011) dont la connexion au circuit (312) est obstruée par le second distributeur (33) revenu dans sa position de départ, mais ladite chambre peut se vider par le second orifice (1012) et la section de circuit (313) qui relie cet orifice au raccord (12). Le piston descend sous l'effet du poids de la masse (2), jusqu'à ce que celle-ci vienne reposer sur ses moyens de support (23) en position basse (21). Il est ainsi possible de régler une course dite de sécurité entre la position basse (21) et une distance inférieure ou égale entre la fin de course et la position de la bague mobile (112) lorsque celle-ci rencontre la butée axiale (1123). Lorsque la tige du vérin se trouvera dans cette plage, la masse reviendra systématiquement à sa position basse si le système est laissé au repos.

Dans la pratique cette plage sera choisie très faible, de quelques dizaines de millimètres au plus, pour éviter tout risque de pincement pour les biens et les personnes se trouvant dans la zone d'opération du vérin.

Avantageusement le vérin (100) comprend des moyens permettant de le manoeuvrer indépendamment de l'énergie électrique en cas de rupture d'acheminement de celle-ci par exemple lorsque le dispositif est alimenté électriquement par des batteries et que celles-ci sont déchargées.

Selon un exemple d'application, figure 5, ce type de vérin peut être utilisé pour manoeuvrer un capotage ou une trappe (200). En position fermée, figure 5A, le poids dudit capotage est repris par son articulation (210) celui-ci se trouvant en position quasi verticale et verrouillée dans un dispositif spécifique (220). Un vérin selon l'invention est utilisé pour fermer et ouvrir ledit capotage. Pour l'ouverture, le capotage est d'abord déverrouillé, puis le vérin est alimenté en pression hydraulique ce qui a pour effet de provoquer la translation du piston (11) et l'ouverture de la trappe (200). Lorsque celle-ci arrive en position haute, figure 5B, l'alimentation électrique est coupée, le vérin s'immobilise et soutient le poids de la trappe (200). Pour refermer la trappe, l'alimentation électrique du second distributeur (33) est rétablie ce qui a pour effet de mettre en communication la chambre de pressurisation (101) du vérin (100) avec la bâche (30) et provoque le recul du piston sous le poids de la trappe (200). Lorsque la trappe arrive dans une position proche du verrouillage (210), le poussoir (111) pousse la bague mobile (112) restée en butée, ce qui a pour effet de découvrir le second orifice (1012) qui met également en communication la chambre de pressurisation avec la bâche (30). Si l'alimentation électrique est sectionnée, la chambre de pressurisation reste alors en communication avec la bâche, par l'intermédiaire du second orifice (1012) bien que le circuit émanant du premier orifice (1011) soit obstrué par le distributeur (33) revenu à sa position de départ. Un opérateur peut alors pousser sur la trappe (200) pour la verrouiller.

Un tel dispositif est par exemple particulièrement avantageux pour la commande d'ouverture, de fermeture et de verrouillage des capots d'inverseur de poussée d'une nacelle de moteur d'aéronef.

De plus, pour cette dernière application, la chambre de pressurisation (101) étant systématiquement reliée à la bâche par l'intermédiaire du second orifice (1012) lorsque le capotage (200) se trouve en position verrouillée, la dilatation ou la contraction thermique de l'huile contenue dans la chambre de pressurisation au cours des phases de vol dudit aéronef ne produit aucun effort parasite sur la trappe (200) et sur son dispositif de verrouillage (220).

Pour pouvoir rouvrir la trappe en l'absence d'alimentation électrique, un raccord (310) pour pompe manuelle peut être avantageusement installé sur la portion de circuit (312) connectant le second distributeur (33) au premier orifice (1011). Dans sa position fermée, la trappe (200) n'exerce pas ou peu d'effort sur la tige du vérin, son poids étant repris par son articulation (210). La perte de charge occasionnée par l'étranglement (335) placé à la sortie du second orifice (1012) suffit à permettre une montée suffisante de la pression dans la chambre de pressurisation (101) pour amener le piston jusqu'à la position de sécurité (210) où la communication entre la chambre de pressurisation (101) et le second orifice (1012) est obstruée par la gorge étanche (1122) de la bague mobile (112). La pression peut alors monter de manière suffisante dans la chambre de pressurisation de sorte à soulever la trappe (200).

De manière également avantageuse, le second distributeur (33) peut comprendre une commande manuelle (331) permettant de mettre en communication le premier orifice (1011) avec le raccord (12) et la bâche (30) en l'absence d'alimentation électrique et permettre ainsi la re-descente de la trappe (200).

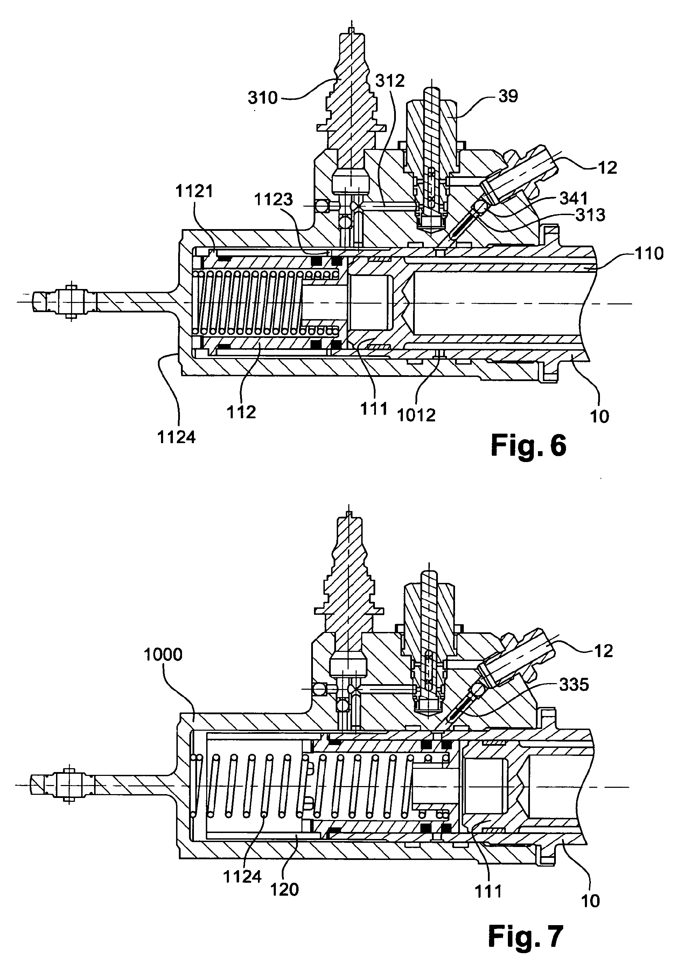

Figure 6 et 7, selon un exemple de réalisation, l'ensemble des fonctions exposées ci-avant est intégré dans un bloc (1000) placé à l'extrémité du corps du vérin (10). À cette fin une rainure (120) est pratiquée à l'extrémité du corps du vérin, rainure dans laquelle viennent coulisser les guidages (1121) de la bague mobile (112). L'extrémité de ladite rainure forme la butée axiale (1123) de la bague. La chambre de pressurisation est partagée entre le corps (10) et le bloc d'extrémité (1000). Cette configuration permet une installation très compacte, particulièrement adaptée aux applications aéronautiques.

La description ci-avant illustre clairement que par ses différentes caractéristiques et leurs avantages, la présente invention atteint les objectifs qu'elle s'était fixés. En particulier, elle permet de mettre en communication la chambre de pressurisation du vérin la bâche au-delà d'une position définie de la tige du vérin sans porter préjudice à la sécurité des dispositifs équipés d'un tel vérin.

## Revendications

1. Vérin hydraulique simple effet (100) comprenant:
- Une chambre de pressurisation (101) agissant sur un piston (11) apte à se déplacer entre deux positions dites de fins de course,
- Un premier orifice (1011) débouchant dans ladite chambre de pressurisation quelle que soit la position du piston et apte à mettre en communication cette chambre avec un circuit hydraulique (312) lequel orifice est toujours passant, ledit vérin étant **caractérisé en ce qu'**il comprend :
- Un deuxième orifice (1012) débouchant dans ladite chambre de pressurisation quelle que soit la position du piston et apte à mettre en communication cette chambre avec un circuit hydraulique (313) lequel orifice est passant pour une première plage de positions du piston et fermé pour une seconde plage de position du piston, la limite entre les deux plages étant distincte des fins de course.

2. Vérin selon la revendication 1 **caractérisé en ce qu'**il comprend des moyens (341) aptes à fermer le deuxième orifice quelle que soit la position du piston lorsque la chambre de pressurisation est alimentée en fluide hydraulique sous pression par le premier orifice (1011).

3. Vérin selon la revendication 1 **caractérisé en ce qu'**il comprend un raccord (12) apte à mettre en communication les deux orifices avec un circuit hydraulique et des moyens (33) aptes à commuter la mise en communication du premier orifice avec le raccord.

4. Vérin selon la revendication 3 **caractérisé en ce que** les moyens de commutation (33) sont aptes à être pilotés manuellement.

5. Nacelle pour moteur d'aéronef **caractérisée en ce qu'**elle comprend un capotage dont l'ouverture et la fermeture sont commandées par un vérin selon l'une quelconque des revendications précédentes

## Claims

1. A single acting hydraulic cylinder (100) comprising:
- A pressurisation chamber (101) acting on a piston (11) capable of being moved between two positions referred to as end-of-travel positions,
- A first hole (1011) opening out into said pressurisation chamber regardless of the position of the piston and capable of placing this chamber in communication with a hydraulic circuit (312), the hole of which remains a through-hole, said cylinder being **characterised in that** it comprises:
- A second hole (1012) opening out into said pressurisation chamber regardless of the position of the piston and capable of placing this chamber in communication with a hydraulic circuit (313), the hole of which is a through-hole for a first range of piston positions and closed for a second range of piston positions, the limit between the two ranges being different from the ends of travel.

2. A cylinder according to claim 1, wherein it comprises means (341) capable of closing the second hole regardless of the position of the piston when the pressurisation chamber is fed with pressurised hydraulic fluid via the first hole (1011).

3. A cylinder according to claim 1, wherein it comprises a connection (12) capable of placing the two holes in communication with a hydraulic circuit and means (33) capable of switching the communication of the first hole with the connection.

4. A cylinder according to claim 3, wherein the switching means (33) are capable of being controlled manually.

5. An aircraft engine nacelle, wherein it comprises a cowling, the opening and closing of which is controlled by a cylinder according to any one of the previous claims.

## Patentansprüche

1. Einfachwirkender Hydraulikzylinder (100), umfassend:
- eine Druckkammer (101), die auf einen Kolben (11) wirkt, der geeignet ist, sich zwischen zwei Positionen, die Endlagen genannt werden, zu bewegen,
- eine erste Öffnung (1011), die unabhängig von der Position des Kolbens in die besagte Druckkammer mündet, und die geeignet ist, diese Kammer mit einem Hydraulikkreis (312) zu verbinden, und die Öffnung immer durchlässig ist, wobei der besagte Zylinder **dadurch gekennzeichnet ist, dass** er folgendes umfasst:
- eine zweite Öffnung (1012), die unabhängig von der Position des Kolbens in die besagte Druckkammer mündet, und die geeignet ist, diese Kammer mit einem Hydraulikkreis (313) zu verbinden, und die Öffnung in einem ersten Positionsbereich des Kolbens durchlässig, und in einem zweiten Positionsbereich des Kolbens geschlossen ist, und sich die Grenze zwischen den beiden Bereichen von den Endlagen unterscheidet.

2. Zylinder nach Anspruch 1, **dadurch gekennzeichnet, dass** er Vorrichtungen (341) umfasst, die geeignet sind, die zweite Öffnung, unabhängig von der Position des Kolbens zu schließen, wenn die Druckkammer durch die erste Öffnung (1011) mit unter Druck stehender Hydraulikflüssigkeit versorgt wird.

3. Zylinder nach Anspruch 1, **dadurch gekennzeichnet, dass** er einen Anschluss (12) umfasst, der geeignet ist, die beiden Öffnungen mit einem Hydraulikkreis in Verbindung zu bringen, und Vorrichtungen (33), die geeignet sind, auf die Verbindung der ersten Öffnung mit dem Anschluss umzuschalten.

4. Zylinder nach Anspruch 3, **dadurch gekennzeichnet, dass** die Umschaltvorrichtungen (33) geeignet sind, von Hand angesteuert zu werden.

5. Gondel für das Triebwerk eines Luftfahrzeugs, **dadurch gekennzeichnet, dass** sie eine Verkleidung umfasst, deren Öffnung und Verschluss von einem Zylinder nach irgendeinem der vorherigen Ansprüche angesteuert wird.
